# FASCICULE DE BREVET EUROPEEN

(11) **EP 1 742 412 B1**
(45) Date de publication et mention de la délivrance du brevet: **14.01.2009**
(21) Numéro de dépôt: 06116672.4
(22) Date de dépôt: 05.07.2006
(51) Int. Cl.: H04L 9/32

(54) **Vérification d'une quantité numérique stockée dans une zone mémoire**
Prüfung einer in einer Speicherzone abgelegten digitalen Nachricht
Verification of a digital message stored in a memory zone

(30) Priorité: 05.07.2005 FR 0552048
(43) Date de publication de la demande: 10.01.2007
(73) Titulaire: ST MICROELECTRONICS S.A., 92120 Montrouge (FR)
(72) Inventeur: TEGLIA, Yannick, 13011, MARSEILLE (FR); LIARDET, Pierre-Yvan, 13790, PEYNIER (FR)
(74) Mandataire: de Beaumont, Michel

(56) Documents cités:
- WO-A-99/55039
- US-A- 5 481 610
- US-A1- 2004 157 584
- HOPKINS: "Transaction Incrementing Message Authentication Key" IBM TECHNICAL DISCLOSURE BULLETIN, IBM CORP. NEW YORK, US, vol. 26, no. 1, juin 1983 (1983-06), pages 199-201, XP002082637 ISSN: 0018-8689

## Description

### Domaine de l'invention

La présente invention concerne, de façon générale, les mécanismes de vérification d'intégrité de quantités numériques stockées dans une zone mémoire d'un circuit électronique. De tels mécanismes servent à vérifier qu'une quantité numérique n'a pas été modifiée accidentellement ou volontairement depuis son enregistrement.

L'invention concerne plus particulièrement le cas de quantités représentant au moins partiellement une clé d'authentification d'un processeur secondaire pour son utilisation par un dispositif électronique contenant un processeur principal.

Un exemple d'application de la présente invention concerne les processeurs multimédias destinés à la téléphonie mobile (GSM).

### Exposé de l'art antérieur

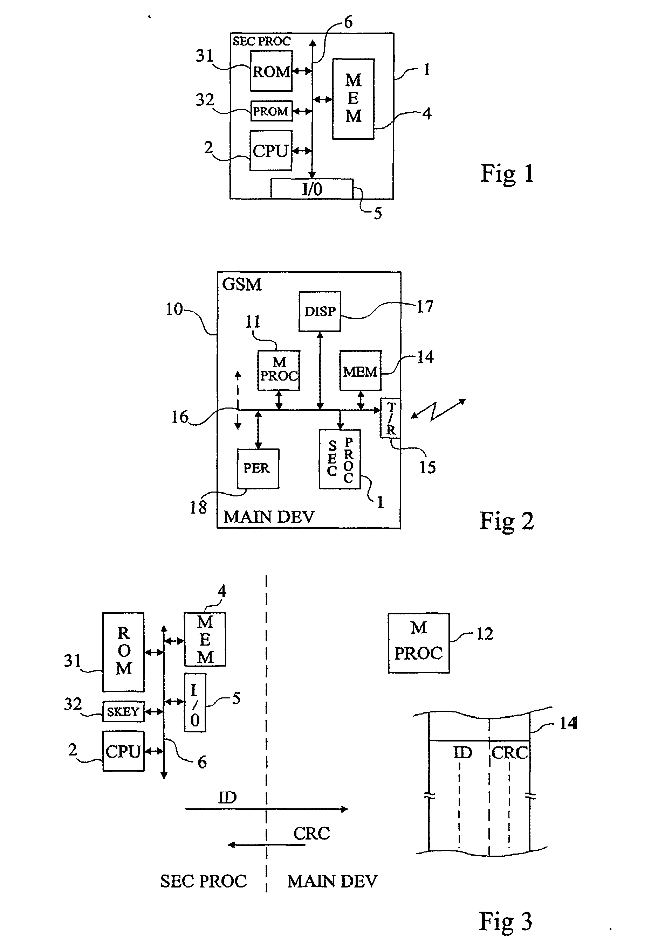

La figure 1 représente, de façon très schématique et sous forme de blocs, un exemple de processeur intégré 1 du type auquel s'applique la présente invention. Un tel processeur comporte, entre autres, une unité centrale de traitement 2 (CPU), une première mémoire 31 de type non volatile (par exemple une mémoire ROM) contenant au moins des programmes, une deuxième mémoire 32 non volatile (par exemple, une PROM) de taille inférieure à la première, une mémoire volatile 4 (MEM) pour l'exécution des programmes stockés dans la mémoire 31, et un élément 5 d'entrée/sortie (I/O) avec ou sans contact pour communiquer avec l'extérieur du processeur. Les éléments internes au processeur 1 communiquent au moyen de plusieurs bus 6 de données, d'adresses et de commandes. D'autres éléments (par exemple, des circuits de traitement multimédia) sont généralement inclus dans le circuit 1.

Un processeur 1 auquel s'applique la présente invention contient généralement, en mémoire non volatile 32 (par exemple, une zone-antifusible ou PROM), une quantité numérique dont au moins une partie est censée rester inconnue de l'extérieur du processeur (secrète). Une telle quantité sert, par exemple, à authentifier le processeur pour lui donner accès à des applications du dispositif électronique dans lequel il est placé, ou sert à chiffrer des échanges entre le dispositif électronique et l'extérieur, les mécanismes de chiffrement étant intégrés dans le circuit 1.

La figure 2 représente, de façon très schématique et sous forme de blocs, un exemple de dispositif électronique 10 (MAIN DEV), par exemple un téléphone mobile de type GSM, contenant un processeur 1 (SEC PROC). Le dispositif 10 comporte au moins un processeur principal 11 (M PROC) communiquant par des bus 16 de données, d'adresses et de commande avec au moins le processeur secondaire 1, une mémoire 14 (MEM), un dispositif d'émission-réception 15 (T/R), un système d'affichage 17 (SCR) et d'autres périphériques 18 (PER). Pour simplifier, tous les éléments du dispositif 10 n'ont pas été illustrés, l'invention se rapportant à la vérification d'intégrité d'une quantité numérique contenue dans la mémoire 32 (figure 1) du processeur secondaire 1.

Les mécanismes de vérification d'intégrité font généralement appel à un calcul d'une empreinte ou signature de la quantité numérique concernée et à une comparaison de cette empreinte par rapport à une valeur attendue, stockée en relation avec un identifiant (par exemple un numéro de série) du circuit contenant la quantité numérique.

La figure 3 illustre un exemple classique de mécanisme de vérification d'intégrité d'une quantité numérique contenue dans un processeur SEC PROC par un dispositif électronique MAIN DEV. Pour simplifier, côté dispositif électronique, seul le processeur principal 12 et un fichier de la mémoire 14 ont été illustrés en figure 3. La mémoire 14 contient, à des fins d'authentification une table d'identifiants (ID) des différents processeurs secondaires et les valeurs attendues d'empreinte ou de signature numérique (CRC) correspondantes. En variante, cette table est contenue dans un système distant avec lequel communique le dispositif électronique, par exemple par le réseau GSM. Côté processeur 1, une quantité numérique SKEY contenue dans la mémoire non volatile 32 est utilisée par l'unité centrale 2 pour calculer une empreinte de type parité ou CRC (Cyclic Redundancy Check). Le processeur secondaire communique son identifiant ID au dispositif principal qui lui retourne une valeur attendue de l'empreinte (CRC). L'unité centrale 2 calcule en interne le CRC correspondant à la quantité SKEY puis compare les deux valeurs de l'empreinte.

Un problème est que la connaissance de l'empreinte elle-même ne doit pas permettre à un fraudeur éventuel de remonter à la quantité secrète. Or, c'est le cas aujourd'hui des fonctions de type contrôle de parité ou calcul de CRC. Plus le mot résultant du CRC est grand, plus il donne une information sur la quantité numérique d'origine. En d'autres termes, plus il diminue la taille effective de la quantité censée rester secrète.

Une première solution serait de stocker l'empreinte dans le processeur secondaire et de la vérifier dans celui-ci (la valeur attendue pour comparaison étant fournie par le dispositif externe). Un inconvénient est toutefois que le stockage de l'empreinte de façon non volatile dans le processeur secondaire prend de la place. Or, il n'est pas envisageable de stocker cette valeur en mémoire ROM 31 à la fabrication car elle doit être individualisée par circuit.

Dans un exemple d'application aux processeurs multimédias pour téléphones mobiles, une quantité numérique de 192 bits est stockée dans une zone de mémoire non-volatile programmable après fabrication (PROM), parmi lesquels 64 bits de clé. La faible capacité de stockage non volatil de cette zone interdit en pratique le stockage d'une empreinte de type CRC ou contrôle de parité.

Une deuxième solution serait d'utiliser un algorithme de calcul de l'empreinte dont le résultat ne donne pas d'information sur la quantité d'origine afin de pouvoir fournir cette empreinte au dispositif externe pour vérification. Ce serait par exemple le cas d'une fonction de condensat ou de brassage (hash function) telle que celle connue sous la dénomination SHA-1.

Un inconvénient est le temps pris par un tel calcul.

Un autre inconvénient est que les processeurs auxquels s'applique la présente invention n'ont généralement pas assez de place en mémoire non volatile inscriptible après fabrication (PROM) pour stocker le résultat d'un calcul d'intégrité plus complexe qu'un calcul de CRC.

Un autre problème est que le calcul de l'empreinte servant à la vérification d'intégrité ne doit pas permettre à un fraudeur éventuel de découvrir la quantité numérique ou au moins sa partie censée rester secrète. Il n'est donc pas envisageable de fournir en clair la quantité secrète au dispositif électronique externe.

Le document US-A-5 481 610 décrit un transmetteur radio dans lequel l'intégrité d'une clé est vérifiée par application d'un CRC.

### Résumé de l'invention

La présente invention vise à pallier tout ou partie des inconvénients des procédés de vérification d'intégrité d'une quantité numérique contenue dans un processeur et représentant au moins pour partie une quantité censée rester inconnue de l'extérieur de ce processeur.

L'invention vise plus particulièrement à éviter le stockage de façon non volatile dans le processeur d'une empreinte résultant d'un calcul d'intégrité.

L'invention vise également à proposer une solution permettant d'utiliser des algorithmes de calcul d'empreinte ne fournissant pas d'information sur la quantité numérique d'origine.

L'invention vise également une solution pour authentifier un processeur secondaire dans un dispositif électronique.

Pour atteindre tout ou partie de ces objets ainsi que d'autres, la présente invention prévoit un procédé de vérification d'une quantité numérique contenue dans un élément de mémorisation non volatile d'un processeur, comportant les étapes :
de découper ladite quantité en blocs de taille identique ;
d'appliquer un algorithme de chiffrement symétrique à chaque bloc ; et
d'appliquer une fonction non linéaire et bijective au résultat des étapes précédentes pour obtenir une valeur courante à comparer à une valeur attendue fournie par l'extérieur du processeur.

Selon un mode de mise en oeuvre de la présente invention, chaque bloc à partir du deuxième est, avant d'y appliquer l'algorithme de chiffrement, combiné avec le résultat fourni par l'algorithme de chiffrement à partir du bloc précédent, le premier bloc étant combiné avec un vecteur d'initialisation.

Selon un mode de mise en oeuvre de la présente invention, ladite valeur attendue est fournie par un élément d'un dispositif électronique contenant ledit processeur, le résultat de la comparaison étant fourni à ce dispositif comme indicateur d'une authentification du processeur sans transmission de la quantité numérique.

Selon un mode de mise en oeuvre de la présente invention, une fonction de repliement précède l'application de la fonction non linéaire et bijective.

Selon un mode de mise en oeuvre de la présente invention, la quantité numérique est encadrée par deux blocs de bits donnés.

Selon un mode de mise en oeuvre de la présente invention, la clé de l'algorithme de chiffrement est publique, ledit bloc complétant la quantité numérique côté bits les moins significatifs étant choisi aléatoirement.

Selon un mode de mise en oeuvre de la présente invention, l'algorithme de chiffrement symétrique utilisé prend en compte un vecteur d'initialisation quelconque et traite ladite quantité numérique en tant que bloc de données.

Selon un mode de mise en oeuvre de la présente invention, l'algorithme de chiffrement est un algorithme DES dont seuls quatre tours sont réalisés.

L'invention prévoit également un processeur intégré et un téléphone mobile.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment représente, de façon très schématique et sous forme de blocs, un exemple de processeur intégré du type auquel s'applique la présente invention ;
la figure 2 qui a été décrite précédemment représente, de façon très schématique et sous forme de blocs, un exemple de dispositif électronique du type auquel s'applique la présente invention ;
la figure 3 qui a été décrite précédemment est destinée à exposer l'état de la technique et le problème posé ;
la figure 4 représente, de façon très schématique et sous forme de blocs, un mode de mise en oeuvre du procédé de vérification d'intégrité selon la présente invention ;
la figure 5 représente, de façon très schématique et sous forme de blocs, un mode de mise en oeuvre d'une étape du procédé de la figure 4 ; et
la figure 6 illustre un exemple d'authentification d'un processeur secondaire par un dispositif électronique mettant en oeuvre le procédé de vérification d'intégrité de l'invention.

De mêmes éléments ont été désignés par les mêmes références aux différentes figures. Pour des raisons de clarté, seuls les étapes et éléments qui sont utiles à la compréhension de l'invention ont été représentés aux figures et seront décrits par la suite. En particulier, les fonctions mises en oeuvre par le processeur authentifié par l'invention n'ont pas été détaillées, l'invention étant compatible avec toute application classique d'un microprocesseur. De plus, l'exploitation faite de la vérification d'intégrité à des fins d'authentification ou autres n'a pas non plus été détaillée, l'invention étant là encore compatible avec toute exploitation classique d'une vérification d'intégrité.

### Description détaillée

Une caractéristique d'un mode de mise en oeuvre de la présente invention est d'appliquer un calcul de code d'authentification de message (MAC ou Message Authentication Code) en utilisant un algorithme de chiffrement symétrique et en utilisant la quantité numérique dont on souhaite vérifier l'intégrité comme mot d'entrée. En général, un algorithme symétrique a recours à une clé et à un vecteur d'initialisation pour chiffrer un mot d'entrée. L'invention prévoit d'appliquer l'algorithme symétrique à la quantité numérique contenant une partie secrète. La clé de l'algorithme et le vecteur d'initialisation peuvent, selon l'invention, être quelconques et non protégés. En particulier, la clé peut être publique.

Une autre caractéristique d'un mode de mise en oeuvre de l'invention est de faire suivre le calcul du MAC d'une fonction non linéaire et bijective.

L'intérêt du MAC est que, connaissant le résultat, il est très difficile pour un fraudeur de retrouver la donnée d'entrée (ici la quantité numérique dont au moins un partie doit rester inconnue de l'extérieur). L'intérêt de le faire suivre d'une fonction non linéaire et bijective est que cela rend l'empreinte finale obtenue irréversible par un calcul inverse.

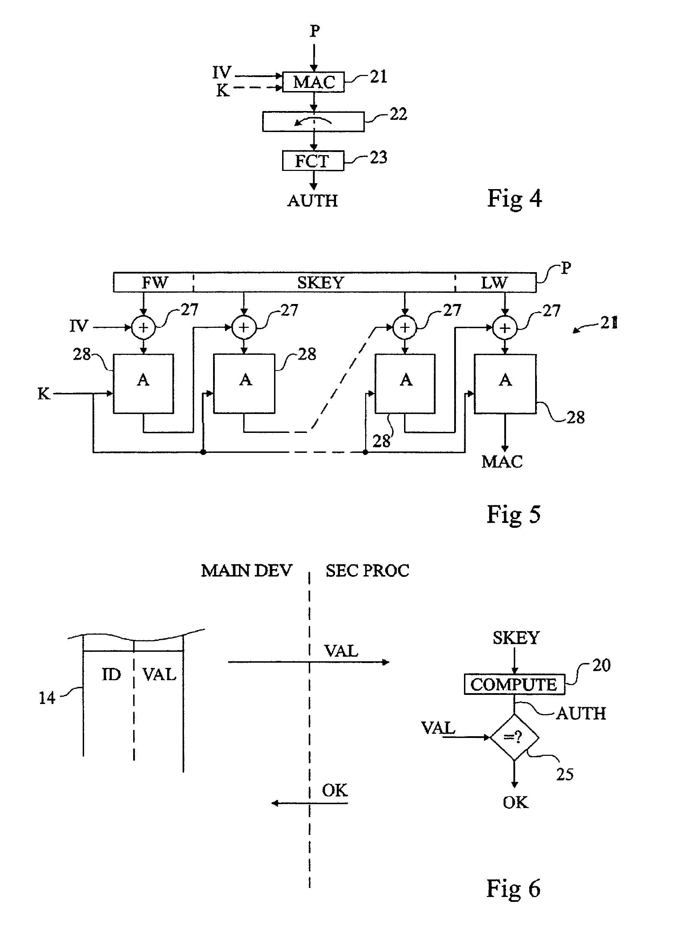

La figure 4 illustre, de façon très schématique et sous forme de blocs, un exemple d'application du procédé de calcul d'empreinte selon l'invention.

On suppose le cas d'un processeur secondaire 1 du type de celui décrit précédemment en relation avec la figure 1, destiné à être authentifié pour utilisation par un dispositif électronique 10 du type de celui décrit précédemment en relation avec la figure 2.

Le calcul d'empreinte peut être divisé en trois étapes.

Une première étape (bloc 21, MAC) consiste en un calcul de code d'authentification de message en utilisant, comme données, la quantité numérique SKEY du processeur secondaire dont au moins une partie est censée rester inconnue de l'extérieur du circuit 1, un vecteur d'initialisation IV et une clé K, par exemple, publique.

La figure 5 représente un exemple de mise en oeuvre du calcul 21 du code MAC à partir de la quantité numérique SKEY, d'un vecteur d'initialisation IV et d'une clé K.

Un calcul de MAC s'effectue par blocs (par exemple, de 32 bits). Le calcul du MAC consiste, pour chaque bloc d'un mot numérique P, à effectuer une combinaison de type OU-Exclusif (bloc 27), ce qui revient à une addition bit à bit, avec le résultat de l'application d'un algorithme de chiffrement (bloc 28, A) au résultat de la combinaison du bloc précédent. La quantité SKEY représentant au moins un bloc est considérée comme donnée d'entrée du mécanisme 21 de la figure 5 et est complétée au moins par un premier bloc FW (côté bits les plus significatifs de la quantité SKEY) et un dernier bloc LW (côté bits les moins significatifs de la quantité SKEY) pour former un mot P à traiter par le mécanisme 21. Ainsi, l'introduction des blocs de la quantité SKEY est masquée en étant confinée aux boucles internes du calcul du MAC. La première combinaison 27 utilise le vecteur d'initialisation IV pour le combiner au bloc FW et la sortie de la dernière application de l'algorithme 28 fournit le résultat MAC, son entrée combinant le bloc LW avec la sortie de l'algorithme 28 de rang précédent. Chaque exécution de l'algorithme de chiffrement utilise la clé K. Si le vecteur d'initialisation est public, le bloc FW est, de préférence, choisi aléatoirement. Si la clé K est publique, le bloc LW est, de préférence, choisi aléatoirement.

A titre d'exemple, l'algorithme A est un algorithme de type DES, simplifié en ce qu'il n'effectue qu'un nombre limité de tours (de préférence, quatre), ce qui suffit pour brasser les bits de la quantité numérique.

Un avantage d'utiliser un algorithme de chiffrement au sein d'une fonction de type MAC est que les processeurs auxquels s'applique la présente invention comportent généralement un circuit matériel exécutant un tel algorithme. C'est notamment le cas du DES dans les processeurs multimédias appliqués aux produits de téléphonie mobile. L'exécution de la fonction est donc rapide et ne demande pas de ressources supplémentaires à celles disponibles dans le processeur. Ainsi, l'algorithme utilisé par l'invention est préférentiellement choisi parmi les algorithmes de chiffrement symétriques disponibles dans le processeur concerné.

Selon le mode de réalisation de l'invention illustré par la figure 4, le résultat MAC est soumis (bloc 22) à une fonction de repliement consistant à replier sa partie gauche sur sa partie droite. Un tel repliement revient à appliquer une combinaison de type OU-Exclusif des bits de la partie droite avec les bits de la partie gauche respectivement. Le résultat de la fonction de repliement qui divise par deux le nombre de bits est ensuite soumis à une fonction (bloc 23, FCT) non linéaire et bijective dont le résultat fournit un mot AUTH représentant l'empreinte de la quantité SKEY. Par exemple, la fonction FCT est f(x) = x + (x² ET C), où C est une constante non nulle.

De préférence, la fonction 23 est précédée d'un forçage d'au moins un bit quelconque à l'état un du résultat du repliement. Un tel forçage garantit la bijectivité de la fonction 23 ultérieure en évitant d'y introduire un nombre nul, faute de quoi il existe un risque de collision dans les résultats AUTH fournis pour des quantités SKEY différentes.

Fonctionnellement, l'application du MAC à la quantité SKEY en tant que donnée constitue un algorithme de diffusion-confusion (brassage des bits), la fonction de repliement assure l'irréversibilité du calcul et la fonction non linéaire bijective apporte le caractère irréversible à partir d'une table qui mettrait en relation les quantités numériques et les empreintes.

La figure 6 illustre, de façon très schématique et par une représentation à rapprocher de celle de la figure 3, un exemple de mise en oeuvre de la vérification d'intégrité selon la présente invention.

Lorsqu'une authentification du processeur secondaire SEC PROC est requise par le dispositif électronique principal MAIN DEV, celui-ci transmet une valeur VAL fonction de l'identifiant ID du processeur secondaire et contenu dans une table 14 en mémoire, à la manière de la solution de la figure 3. Cette valeur VAL constitue l'empreinte attendue si la quantité SKEY est conforme à l'identifiant ID du processeur. Côté processeur secondaire, celui-ci effectue le calcul (bloc 20, COMPUTE) de l'empreinte AUTH. Ce résultat est alors comparé (bloc 25, = ?) à la valeur VAL fournie par le dispositif électronique pour valider (OK) ou non l'intégrité de la quantité SKEY. Ce message de validation OK est fourni au dispositif électronique MAIN DEV qui l'exploite, par exemple, pour autoriser ou non les différentes fonctions liées à l'application du processeur secondaire.

D'autres échanges non représentés peuvent précéder l'envoi de la valeur VAL, notamment la fourniture, par le processeur secondaire SEC PROC, de son identifiant ID.

La valeur VAL est, par exemple, stockée avec l'identifiant ID lors de la personnalisation du dispositif MAIN DEV, par exemple, dans une zone accessible publiquement. En effet, il n'est pas gênant de rendre cette valeur publique dans la mesure où elle ne divulgue en rien la quantité SKEY. En variante, le dispositif électronique interroge un système distant, par exemple en utilisant le réseau GSM dans l'application aux processeurs multimédias pour téléphones mobiles, pour obtenir la valeur VAL à partir de l'identifiant ID du processeur.

Un avantage de la présente invention est qu'elle permet de vérifier l'intégrité d'une quantité numérique sans nécessiter le stockage de l'empreinte dans le circuit contenant cette quantité numérique, ni en fragiliser le caractère inconnu de l'extérieur du circuit.

Un autre avantage de l'invention est qu'elle tire profit des éléments de calcul existants (notamment des algorithmes de chiffrement) contenus dans le processeur à authentifier, ce qui économise de la place dans sa mémoire non volatile destinée aux programmes.

Bien entendu, la présente invention est susceptible de diverses variantes et modifications qui apparaîtront à l'homme de l'art. En particulier, la mise en oeuvre pratique de l'invention à partir des outils logiciels et/ou matériels est à la portée de l'homme du métier à partir des indications fonctionnelles données ci-dessus.

## Revendications

1. Procédé de vérification d'une quantité numérique (SKEY) contenue dans un élément de mémorisation non volatile (32) d'un processeur (1), **caractérisé en ce qu'**il comporte les étapes :
de découper ladite quantité en blocs de taille identique ;
d'appliquer un algorithme de chiffrement symétrique (21) à chaque bloc ;
d'appliquer une fonction de repliement (22) ; et
d'appliquer une fonction non linéaire et bijective (23) au résultat (MAC) des étapes précédentes pour obtenir une valeur courante (AUTH) à comparer à une valeur attendue (VAL) fournie par l'extérieur du processeur.

2. Procédé selon la revendication 1, dans lequel chaque bloc à partir du deuxième est, avant d'y appliquer (28) l'algorithme de chiffrement, combiné (27) avec le résultat fourni par l'algorithme de chiffrement à partir du bloc précédent, le premier bloc étant combiné avec un vecteur d'initialisation (IV).

3. Procédé selon la revendication 1 ou 2, dans lequel ladite valeur attendue (VAL) est fournie par un élément d'un dispositif électronique (10) contenant ledit processeur (1), le résultat (OK) de la comparaison étant fourni à ce dispositif comme indicateur d'une authentification du processeur sans transmission de la quantité numérique (SKEY).

4. Procédé selon l'une quelconque des revendications 1 à 3, dans lequel la quantité numérique (SKEY) est encadrée par deux blocs de bits donnés (FW, LW).

5. Procédé selon la revendication 4, dans lequel la clé (K) de l'algorithme de chiffrement est publique, ledit bloc (LW) complétant la quantité numérique (SKEY) côté bits les moins significatifs étant choisi aléatoirement.

6. Procédé selon l'une quelconque des revendications 1 à 5, dans lequel l'algorithme de chiffrement symétrique utilisé prend en compte un vecteur d'initialisation (IV) quelconque et traite ladite quantité numérique (SKEY) en tant que bloc de données.

7. Procédé selon l'une quelconque des revendications 1 à 6, dans lequel l'algorithme de chiffrement est un algorithme DES dont seuls quatre tours sont réalisés.

8. Processeur intégré (1), **caractérisé en ce qu'**il comporte des moyens pour la mise en oeuvre du procédé selon l'une quelconque des revendications 1 à 7.

9. Téléphone mobile (10), **caractérisé en ce qu'**il comporte un processeur selon la revendication 8.

## Claims

1. A method for checking a digital quantity (SKEY) contained in a non-volatile storage element (32) of a processor (1), comprising the steps of:
dividing said block into blocks of identical size;
applying a symmetrical ciphering algorithm (21) to each block;
applying a folding function (22); and
applying a non-linear bijective function (23) to the result (MAC) of the previous steps to obtain a current value (AUTH) to be compared with an expected value (VAL) provided by the outside of the processor.

2. The method of claim 1, wherein each block, starting from the second one, is, before applying (28) the ciphering algorithm, combined (27) with the result provided by the ciphering algorithm from the previous block, the first block being combined with an initialization vector (IV).

3. The method of claim 1 or 2, wherein said expected value (VAL) is provided by an element of an electronic device (10) containing said processor (1), the result (OK) of the comparison being provided to this device as indicating an authentication of the processor with no transmission of the digital quantity (SKEY) .

4. The method of any of claims 1 to 3, wherein the digital quantity (SKEY) is surrounded with two given bit blocks (FW, LW).

5. The method of claim 4, wherein the key (K) of the ciphering algorithm is public, said block (LW) completing the digital quantity (SKEY) on the least-significant bit side being selected randomly.

6. The method of any of claims 1 to 5, wherein the used symmetrical ciphering algorithm takes into account any initialization vector (IV) and processes said digital quantity (SKEY) as a data block.

7. The method of any of claims 1 to 6, wherein the ciphering algorithm is a DES algorithm, only four turns of which are performed.

8. An integrated processor (1), comprising means for implementing the method of any of claims 1 to 7.

9. A mobile phone (10), comprising the processor of claim 8.

## Patentansprüche

1. Ein Verfahren zum Prüfen einer digitalen Größe (SKEY), die in einem nicht-flüchtigen Speicherelement (32) von einem Prozessor (1) enthalten ist, wobei das Verfahren die folgenden Schritte aufweist:
Dividieren bzw. Unterteilen des Blocks in Blöcke mit identischer Größe;
Anwenden eines symmetrischen Chiffrier-Algorithmus (21) auf jeden Block;
Anwenden einer Faltungsfunktion (22); und
Anwenden einer nicht-linearen ein-eindeutigen bzw. bijektiven Funktion (23) auf das Ergebnis (MAC) von den vorhergehenden Schritten, um einen aktuellen Wert (AUTH) zu erlangen, der mit einem erwarteten Wert (VAL) zu vergleichen ist, der von außerhalb des Prozessors vorgesehen wird.

2. Verfahren nach Anspruch 1, wobei jeder Block, startend von dem zweiten, vor Anlegen (28) des Chiffrier-Algorithmus mit dem Ergebnis kombiniert (27) wird, das durch den Chiffrier-Algorithmus von dem vorhergehenden Block vorgesehen wird, wobei der erste Block mit einem Initialisierungsvektor (IV) kombiniert wird.

3. Verfahren nach Anspruch 1 oder 2, wobei jeder erwartete Wert (VAL) durch ein Element von einer elektronischen Einrichtung (10), die den Prozessor (1) enthält, vorgesehen ist, wobei das Ergebnis (OK) von dem Vergleich für diese Einrichtung vorgesehen ist, um eine Authentisierung von dem Prozessor ohne Übertragung von der digitalen Größe (SKEY) anzuzeigen.

4. Verfahren nach irgendeinem der Ansprüche 1 bis 3, wobei die digitale Größe (SKEY) mit zwei gegebenen Bit-Blöcken (FW, LW) umgeben ist.

5. Verfahren nach Anspruch 4, wobei der Schlüssel (K) von dem Chiffrier-Algorithmus öffentlich ist, der Block (LW), der die digitale Größe (SKEY) auf der am wenigsten signifikanten Bit-Seite vervollständigt, zufällig ausgewählt wird.

6. Verfahren nach irgendeinem der Ansprüche 1 bis 5, wobei der genutzte symmetrische Chiffrier-Algorithmus jedwelchen Initialisierungsvektor (IV) berücksichtigt und die digitale Größe (SKEY) als einen Datenblock verarbeitet.

7. Verfahren nach irgendeinem der Ansprüche 1 bis 6, wobei der Chiffrier-Algorithmus ein DES Algorithmus ist, von dem nur vier Runden durchgeführt werden.

8. Ein integrierter Prozessor (1) der Mittel aufweist zum Implementieren des Verfahrens nach irgendeinem der Ansprüche 1 bis 7.

9. Ein mobiles Telefon (10), das den Prozessor nach Anspruch 8 aufweist.
